# EUROPÄISCHE PATENTSCHRIFT

(11) **EP 0 515 950 B1**
(45) Veröffentlichungstag und Bekanntmachung des Hinweises auf die Patenterteilung: **02.02.1994**
(21) Anmeldenummer: 92108407.5
(22) Anmeldetag: 19.05.1992
(51) Int. Cl.: C01B 3/36

(54) **Herstellung von Synthesegas aus aschereichen Kohlenwasserstoffen**
Synthesis gas production from ash-containing hydrocarbons
Production de gaz de synthèse à partir d'hydrocarbures contenant des cendres

(30) Priorität: 27.05.1991 DE 4117266
(43) Veröffentlichungstag der Anmeldung: 02.12.1992
(73) Patentinhaber: HOECHST AKTIENGESELLSCHAFT, 65926 Frankfurt am Main (DE)
(72) Erfinder: Müller, Thomas, W-4220 Dinslaken (DE); Leder, Herbert, W-4200 Oberhausen (DE); Schneller, Peter, Dr. Dipl.-Ing., W-4200 Oberhausen (DE); Poloszyk, Klaus, W-4270 Dorsten (DE); Höfs, Wolfgang, W-4200 Oberhausen (DE); Brunke, Wolfgang, W-4250 Bottrop (DE)

(56) Entgegenhaltungen:
- DE-A- 1 812 122
- DE-A- 2 718 404
- FR-A- 2 505 808
- US-A- 4 889 657

## Beschreibung

Die vorliegende Erfindung betrifft ein Verfahren zur Gewinnung von Synthesegas aus Kohlenwasserstoffen, insbesondere aus aschereichem Schweröl.

Die Umwandlung von Erdöl bzw. Erdölfraktionen in Synthesegas, d.h. einem Gemisch aus Wasserstoff und Kohlenmonoxid kann nach verschiedenen Verfahren erfolgen, die sich u.a. durch die Art der Einsatzstoffe und der Oxidationsmittel und durch die Reaktionsbedingungen unterscheiden. Besonders weite Anwendung hat zur Synthesegaserzeugung die partielle Verbrennung von Erdöl unter erhöhtem Druck gefunden. Sie wird hauptsächlich nach zwei Prozessen ausgeübt, die von der Texaco Comp. zusammen mit der Hydrocarbon Res. Inc. bzw. von der Shell Comp. entwickelt wurden. Bei beiden Verfahren entsteht unter üblichen Betriebsbedingungen, d.h. bei 1100 bis 1500°C und 1 bis 4 MPa in einer Menge von etwa 1 bis 3 Gew.-% (bezogen auf den Öleinsatz) als Nebenprodukt Ruß, der aus dem Gas mit Wasser ausgewaschen wird. Rußrestgehalte in der Größenordnung von 1 bis 3 Gew.-% vorzugsweise 1,5 bis 2 % sind unter den heute üblichen Bedingungen für eine gute Gasausbeute und den Transport der flüssigen Aschekomponenten, insbesondere durch Wärmetauscher notwendig. Denn der Ruß umhüllt die Asche und wirkt dadurch ihrer Ablagerung an den Wandungen von Anlageteilen entgegen.

Das rußhaltige Waschwasser kann einer konventionellen Wasseraufbereitungsanlage, die unabhängig vom Vergasungsverfahren arbeitet, zugeführt werden. Häufiger befreit man es in einer, in das Vergasungsverfahren integrierten Anlage von Ruß. Nach einem bewährten Verfahren trennt man den Ruß mit Leichtöl aus der Wasser-Ruß-Suspension ab, vermischt den Leichtöl-Ruß-Brei mit Schweröl und zieht das Leichtöl in einem Ölstripper als Kopfprodukt ab. Das aus Ruß und Schweröl bestehende Bodenprodukt kehrt entweder in den Reaktor zurück oder wird extern verbrannt.

Das Waschwasser wird überwiegend in die Waschstufe rezirkuliert. Ein geringer Anteil, er geht auf den, dem Vergasungsreaktor als Reaktionskomponente zugeführten Dampf zurück, wird als sogenanntes Grauwasser in das Abwasser geleitet.

Schwere Heizöle, wie sie im Texaco- bzw. Shell-Verfahren eingesetzt werden, enthalten in der Regel als wesentliche Aschebestandteile Nickel und Vanadium. Sie werden beim Vergasungsvorgang, sieht man von geringen Mengen ab, die im Vergasungsreaktor verbleiben, mit dem Rohgasstrom ausgetragen und durch Wasserwäsche zusammen mit dem Ruß vom Gas getrennt.

Ein großer Teil der Vanadium-/Nickel-Komponenten befindet sich daher im Prozeßwasser, d.h. im Waschwasser und im Grauwasser, und wird somit in das Abwasser geleitet. Der Rest lagert sich auch im Reaktor, in Abscheidern für die flüssige Schlacke oder anderen Teilen der Anlage ab.

Die bekannten Arbeitsweisen sind im Hinblick auf einen zuverlässigen und die Umwelt schonenden Betrieb der Vergasungsanlage nicht frei von Mängeln.

Die Rezirkulation des aus der Wasserphase extrahierten Rußes in den Vergasungsreaktor hat zur Folge, daß auch die im Ruß enthaltenen Metalle in den Reaktor zurückgelangen. Sie führen nicht nur dort zu störenden Ablagerungen, sondern vor allem auch in den Wärmerückgewinnungsanlagen, die in der Regel als Rauchrohrkessel ausgestaltet sind. Diese verstopfen im Laufe der Zeit, so daß kostspielige Reinigungsoperationen, verbunden mit Stillständen der Anlage, erforderlich werden. Bei zu niedrigem Ruß-/Asche-Verhältnis werden auch Ascheablagerungen an den thermisch hoch beanspruchten Einläufen in die Konvektionskessel beobachtet. Sie verursachen dort erhöhte Turbulenz mit sehr starker Wandüberhitzung und führen so zur Zerstörung der Einläufe.

Bei Einleitung des rußhaltigen Abwassers in konventionelle, z.B. biologische Aufbereitungsanlagen, die eine Rückführung der Metalle zum Reaktor vermeidet, werden nicht mehr tolerierbare Mengen der besonders umweltschädlichen Metalle Nickel und Vanadium in offene Systeme abgeben. Schließlich ist auch die Lagerung der Verbrennungsasche aus den Klärschlämmen solcher Anlagen wegen der guten Extrahierbarkeit von Vanadiumpentoxid auf Spezialdeponien erforderlich und daher mit hohen Kosten belastet.

Die aufgezeigten Mängel wiegen besonders schwer, weil damit zu rechnen ist, daß sich in Zukunft als Folge der fortschreitenden Aufarbeitung des Erdöls zu Benzin, Diesel oder Naphtha oder die Verwendung von Bitumen, das von Natur aus höhere Schwermetallanteile enthält, die Situation verschärfen wird.

Es bestand daher die Aufgabe, bei der Vergasung von aschereichem Schweröl sicherzustellen, daß die in den Vergasungsprodukten als Verbindungen enthaltenen Metalle, Nickel und Vanadium vollständig und möglichst hochkonzentriert abgeschieden werden. Insbesondere sollen die die Vergasungsanlage verlassenden Abwässer frei von Metallen sein.

Die Erfindung löst diese Aufgabe mit Hilfe eines Verfahrens zur Herstellung von Synthesegas durch partielle Oxidation aschereicher Kohlenwasserstoffe unter Bildung von Ruß als Nebenprodukt. Es ist dadurch gekennzeichnet, daß man die Kohlenwasserstoffe unter Bedingungen oxidiert, die zur Bildung von etwa 0,1 bis etwa 0,3 Gew.-% Ruß, bezogen auf den als Kohlenwasserstoffe eingesetzten Kohlenstoff, führen, das Rohgas zunächst in einem Strahlungskühler, darauf in einem Konvektionskühler abkühlt, anschließend in einem Naßabscheider mit Wasser wäscht, das anfallende, insbesondere Ruß suspendiert sowie feste und gasförmige Stoffe gelöst enthaltende Waschwasser gegebenenfalls nach Vereinigung mit der Wasserphase des Strahlungskühlers filtriert und in die Vergasungsanlage zurückführt, das mit Wasserdampf gesättigte Rohgas in einem Wärmeaustauschsystem abkühlt und das abgeschiedene Wasser, soweit es zur Aufrechterhaltung des Wasserstandes in der Anlage nicht ebenfalls zurückgeführt wird, in eine Abwasseraufbereitungsanlage leitet.

Das erfindungsgemäße Verfahren geht von aschereichen Kohlenwasserstoffen als Rohstoff für die Synthesegaserzeugung aus. Vorzugsweise setzt man Schweröle ein, d.h. Gemische flüssiger Kohlenwasserstoffe, die bei der Destillation von Erdöl als hochsiedende Fraktionen anfallen. Schweröle enthalten als aschebildende Bestandteile insbesondere Verbindungen des Vanadiums und Nickels und daneben des Eisens, Chroms und Molybdäns in Mengen von etwa 1 bis 2500 ppm Metall.

Die partielle Oxidation der Kohlenwasserstoffe bzw. Kohlenwasserstoffgemische erfolgt nach den eingangs beschriebenen Verfahren des Standes der Technik. Ein wesentliches Merkmal des neuen Prozesses ist es, die Oxidation so zu lenken, daß nur geringe Mengen, nämlich zwischen 0,1 und maximal 0,3 Gew.-% Ruß, bezogen auf den in Form von Kohlenwasserstoffen eingesetzten Kohlenstoff, gebildet wird. Die Höhe des Rußanteils im Reaktionsprodukt wird in bekannter Weise über die zugeführte Sauerstoffmenge eingestellt, überdies kann sich der Einsatz eines speziell gestalteten Brenners empfehlen (vgl. z.B. EP-B1-0 095 103).

Das den Vergasungsreaktor mit einer Temperatur von 1300 bis 1500 °C verlassende Rohgas enthält neben geringen Mengen Ruß Metalle und Metallverbindungen in flüssiger Form. Erfindunsgemäß wird es zunächst in einem Strahlungskühler auf Temperaturen vorgekühlt, bei denen die metallischen Verunreinigungen ohne wesentlichen Kontakt mit der Kühlerwandung erstarren, d.h. auf Temperaturen von 500 bis 1000°C. Die festen Partikel setzen sich zum Teil im Wassersumpf des Strahlungskühlers ab und werden von dort ausgetragen. Die bei der Vergasung von Schweröl bisher nicht übliche Vorkühlung des Rohgases in einem Strahlungskühler hat den Vorteil, daß sich die unter den vorherrschenden Temperaturbedingungen flüssigen oder plastischen Verunreiniungen nicht auf den Wärmeaustauschflächen der empfindlichen Konvektionskühler ablagern, ein Vorgang, der Verstopfungen und wie bereits erwähnt, in Verbindung mit erhöhter Turbulenz auch Wandüberhitzungen und Wandzerstörungen an den Einläufen der üblicherweise verwendeten Konvektionskühler auslösen kann.

Zur weiteren Abkühlung auf 250 bis 300°C, vorzugsweise 260 bis 280°C leitet man das noch restliche Anteile feiner Metallpartikel und Rußteilchen enthaltende Rohgas in einen Konvektionskühler. Weil die vom Gas mitgeführten Verunreinigungen bereits erstarrt sind, beeinträchtigen sie die Wirksamkeit des Konvektionskühlers durch Verlegung der Strömungswege und Ablagerungen auf den Austauschflächen nicht.

Die nahezu restlose Abscheidung der Feststoffe erfolgt durch Waschen des Gases mit Wasser. Dieser Teilschritt des Verfahrens kann in bekannter Weise mit Hilfe von Naßabscheidern des Standes der Technik durchgeführt werden. Besonders bewährt haben sich mit Wasser berieselte Füllkörpertürme, die gegebenenfalls auch in Verbindung mit Venturiwäschern angewandt werden können. Es ist notwendig, das frische Waschwasser vorzuwärmen, vorteilhaft durch Wärmeaustausch mit beladenem Waschwasser. Zweckmäßig sind die Füllkörpertürme am Kopf mit einem wirksamen Tropfenabscheider versehen.

Im Anschluß an die Gaswäsche sind zwei Stoffströme getrennt weiterzubehandeln: die mit Feststoffen beladene Wasserphase (Waschwasser) und die feststofffreie stark wasserdampfhaltige Gasphase.

Das beladene Waschwasser, das der Waschvorrichtung, wie bereits gesagt, durch Wärmeaustausch vorerhitzt zugeführt werden kann, ist durch die vom Rohgas übertragene Wärme, nämlich die fühlbare Wärme und den Wärmeinhalt des teilweise kondensierenden Wasserdampfes, stark erhitzt. Es wird daher zweckmäßig aus dem Sumpf der Waschvorrichtung über einen oder mehrere Wärmeaustauscher geleitet und, vorzugsweise nach Vereinigung mit dem Sumpfwasser des Strahlungskühlers, sowie gegebenenfalls nach Zwischenlagerung einer Filtriervorrichtung zugeführt. Hier erfolgt die Trennung von Feststoff- und Wasserphase. Der Feststoff, er enthält Ruß und in hohem Anteil Metall bzw. Metallverbindungen, kann nach bekannten metallurgischen Verfahren zur Gewinnung der Metalle weiterverarbeitet werden.

Die Wasserphase ist nahezu frei von suspendierten Feststoffen. Sie enthält aber noch bis zu 2 mg Metallverbindungen je Liter gelöst, eine Menge, die im allgemeinen für die Weiterbehandlung des Abwassers in Aufbereitungsanlagen nicht toleriert wird. Erfindungsgemäß führt man daher diesen, im Gesamtprozeß anfallenden Wasseranteil, zur Reinigung des Rohgases zurück. Die Hauptmenge wird dem Naßabscheider zugeleitet, ein geringerer Anteil wird zur Aufrechterhaltung des Wasserstandes im Strahlungskühler verwendet.

Das feststofffreie Gas aus der Wasserwäsche ist mit Wasserdampf gesättigt. Es wird zur Gewinnung der Nutzwärme ein- oder mehrstufig abgekühlt. Dabei fällt im Rahmen des Gesamtprozesses ein zweiter Wasseranteil an, der Metalle und Metallverbindungen in Mengen <0,1 mg/l, also in einer Konzentration, die weit unterhalb der vom Gesetzgeber geduldeten Maximalkonzentration liegt, enthält. Dieses Abwasser kann daher unmittelbar einer Wasseraufbereitung zugeführt werden, um flüchtige Verbindungen abzutrennen. Hierzu gehören Schwefelwasserstoff, Cyanwasserstoff und Ammoniak, die in gebundener oder freier Form vorliegen können. Nach einem bevorzugten Verfahren entfernt man die Verunreinigungen durch Strippen der wäßrigen Lösung mit einem inerten gasförmigen Medium bei erhöhter Temperatur. Es hat sich bewährt, den pH-Wert der Lösung, zweckmäßig unmittelbar nach ihrer Entstehung, auf einen Wert von etwa 3 oder weniger einzustellen und zunächst in einer ersten Abtreibekolonne Schwefelwasserstoff und Cyanwasserstoff abzutrennen, darauf den pH-Wert auf etwa 10 oder mehr zu erhöhen und in einer zweiten Abtreibekolonne Ammoniak zu entfernen. Als inerte gasförmige Medien finden vorzugsweise Luft und insbesondere Dampf Anwendung.

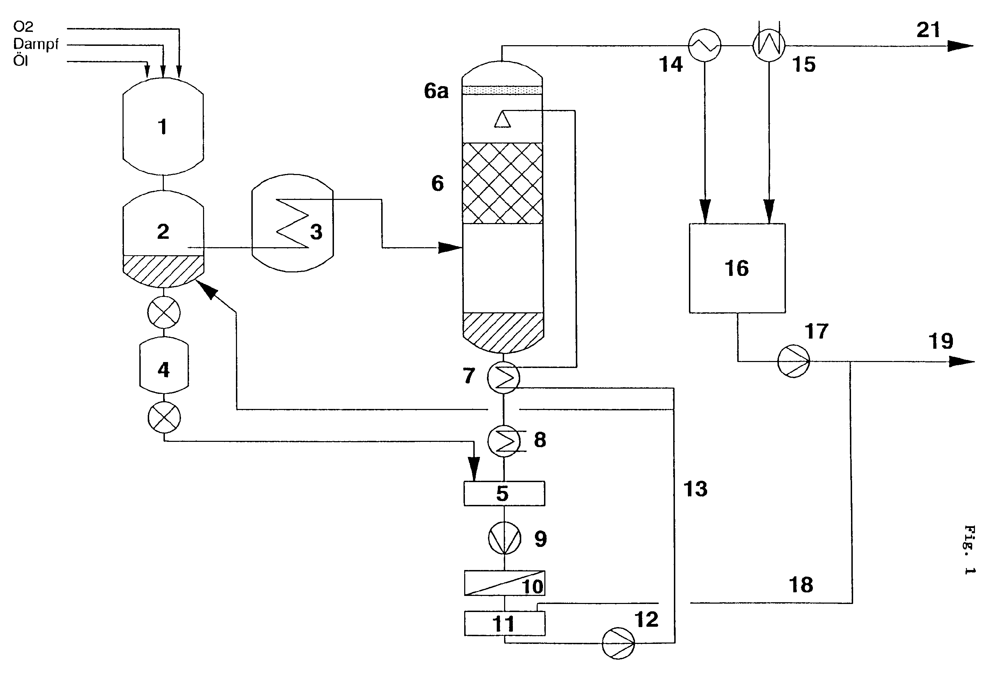

Im folgenden wird eine Ausführungsform des erfindungsgemäßen Verfahrens, sie ist in der beigefügten Abbildung dargestellt, näher erläutert.

In einem Reaktor 1 wird Schweröl mit Wasserdampf und Sauerstoff zu rohem Synthesegas (Rohgas) umgesetzt, das nach Vorkühlung in einem Strahlungskühler 2 in einen Konvektionskühler 3 geleitet wird. Im Strahlungskühler 2 abgeschiedene Feststoffe werden, in Wasser suspendiert, über eine Schleuse 4 aus dem Kühler ausgetragen und in einen Tank 5 überführt. Das noch Feststoffpartikel enthaltende Rohgas wird in einem Naßabscheider 6, im vorliegenden Fall einem mit Füllkörpern versehenen Rieselturm, der mit einem Tropfenfänger 6a ausgestattet ist, gewaschen. Das Feststoffe suspendiert enthaltende Waschwasser wird vom Sumpf des Rieselturms über einen Wärmeaustauscher 7 und einen Kühler 8 in den Tank 5 geleitet. Von dort gelangt es mittels einer Pumpe 9 auf eine Filtriervorrichtung 10. Das Filtrat, die von Feststoffen befreite wäßrige Phase, wird in einem Tank 11 gesammelt und mit Hilfe einer Pumpe 12 über eine Leitung 13 und den Wärmeaustauscher 7 vorzugsweise in den Naßabscheider 6, zum geringeren Teil zur Aufrechterhaltung des Wasserstandes in den Strahlungskühler 2 zurückgeführt. Das den Naßabscheider 6 verlassende Gas gelangt nach Abkühlen in einen Wärmeaustauscher 14 und einen Kühler 15 zum Verbraucher. Das aus dem Gas kondensierte Wasser wird in einem Tank 16 zwischengelagert. Von dort wird eine geringe Menge mit Hilfe einer Pumpe 17 über eine Leitung 18 und den Tank 11, soweit zur Aufrechterhaltung des Wasserstandes in der Anlage benötigt, in den Prozeß zurückgeführt, der überwiegende Anteil über eine Leitung 19 in eine nachgeschaltete Wasseraufbereitung geleitet.

## Patentansprüche

1. Verfahren zur Herstellung von Synthesegas durch partielle Oxidation aschereicher Kohlenwasserstoffe unter Bildung von Ruß als Nebenprodukt, dadurch gekennzeichnet, daß man die Kohlenwasserstoffe unter Bedingungen oxidiert, die zur Bildung von etwa 0,1 bis etwa 0,3 Gew.% Ruß, bezogen auf den als Kohlenwasserstoffe eingesetzten Kohlenstoff, führen, das Rohgas zunächst in einem Strahlungskühler, darauf in einem Konvektionskühler abkühlt, anschließend in einem Naßabscheider mit Wasser wäscht, das anfallende, insbesondere Ruß suspendiert sowie feste und gasförmige Stoffe gelöst enthaltende Waschwasser gegebenenfalls nach Vereinigung mit der Wasserphase des Strahlungskühlers filtriert und in die Vergasungsanlage zurückführt, das mit Wasserdampf gesättigte Rohgas in einem Wärmeaustauschsystem abkühlt und das abgeschiedene Wasser , soweit es zur Aufrechterhaltung des Wasserstandes in der Anlage nicht ebenfalls zurückgeführt wird, in eine Wasseraufbereitungsanlage leitet.

2. Verfahren nach Anspruch 1 dadurch gekennzeichnet, daß das Rohgas im Strahlungskühler auf 500 bis 1000°C abgekühlt wird.

3. Verfahren nach Anspruch 1 oder 2 dadurch gekennzeichnet, daß das Rohgas im Konvektionskühler auf 250 bis 300°C, vorzugsweise 260 bis 280°C abgekühlt wird.

4. Verfahren nach einem oder mehreren der Ansprüche 1 bis 3 dadurch gekennzeichnet, daß das Rohgas in mit Wasser berieselten Füllkörperkolonnen gewaschen wird.

5. Verfahren nach Anspruch 4 dadurch gekennzeichnet, daß die Wäsche mit vorgewärmten Wasser erfolgt.

6. Verfahren nach Anspruch 5 dadurch gekennzeichnet, daß das frische Waschwasser durch Wärmeaustausch mit beladenem Waschwasser vorgewärmt wird.

7. Verfahren nach einem oder mehreren der Ansprüche 1 bis 6 dadurch gekennzeichnet, daß das feststofffreie, mit Wasserdampf gesättigte Rohgas in mehreren Stufen unter Wärmerückgewinnung abgekühlt wird.

## Claims

1. A process for producing synthesis gas by partial oxidation of ash-rich hydrocarbons with the formation of soot as a byproduct, wherein the hydrocarbons are oxidized under conditions which lead to the formation of approximately 0.1 to approximately 0.3 % by weight soot relative to the carbon used in the form of hydrocarbons, the raw gas is cooled first in a radiant cooler, then in a convection cooler, and then finally washed with water in a wet separator, the washwater produced, which in particular contains suspended soot and dissolved solid and gaseous substances, is filtered, if necessary after combining it with the aqueous phase from the radiant cooler, and returned to the gasification plant, the raw gas saturated with water vapor is cooled in a heat exchange system and the separated water is directed to a waste water treatment plant unless it is returned to maintain the water level in the plant.

2. A process as claimed in claim 1, wherein the raw gas is cooled in the radiant cooler to 500 to 1000°C.

3. A process as claimed in claim 1 or 2, wherein the raw gas is cooled in the convection cooler to 250 to 300°C, preferably 260 to 280°C.

4. A process as claimed in one or more of claims 1 to 3, wherein the raw gas is washed in packed columns irrigated with water.

5. Process as claimed in claim 4, wherein the washing is carried out with preheated water.

6. Process as claimed in claim 5, wherein the fresh washwater is preheated.

7. Process as claimed in one or more of claims 1 to 6, wherein the solids-free raw gas saturated with water vapor is cooled in a plurality of stages with the recovery of heat.

## Revendications

1. Procédé de préparation de gaz de synthèse par oxydation partielle d'hydrocarbures riches en cendres avec formation de suie en tant que produit secondaire, caractérisé en ce qu'on oxyde les hydrocarbures dans des conditions qui conduisent à la formation d'environ 0,1 à environ 0,3% en poids de suie par rapport au carbone introduit sous forme d'hydrocarbures, qu'on refroidit le gaz brut d'abord dans un réfrigérant à radiation, puis dans un réfrigérant à convexion, qu'on le lave ensuite avec de l'eau dans un séparateur par voie humide, qu'on filtre l'eau de lavage obtenue contenant de la suie en suspension ainsi que des matières solides ou gazeuses dissoutes, le cas échéant après réunion avec la phase aqueuse du réfrigérant à radiation et qu'on la recycle dans l'installation de gazéification, qu'on refroidit le gaz brut saturé de vapeur d'eau dans un système d'échange thermique et qu'on envoie l'eau séparée, pour autant qu'elle n'est pas également réintroduite dans l'installation afin de maintenir le niveau de l'eau, dans une installation de traitement des eaux usées.

2. Procédé selon la revendication 1, caractérisé en ce que le gaz brut est refroidi dans le réfrigérant à radiation à une température de 500 à 1 000°C.

3. Procédé selon la revendication 1 ou 2, caractérisé en ce que le gaz brut est refroidi dans le réfrigérant à convexion à une température de 250 à 300°C, de préférence de 260 à 280°C.

4. Procédé selon une ou plusieurs des revendications 1 à 3, caractérisé en ce que le gaz brut est lavé dans des colonnes à corps de remplissage à ruissellement d'eau.

5. Procédé selon la revendication 4, caractérisé en ce que le lavage est effectué avec de l'eau préchauffée.

6. Procédé selon la revendication 5, caractérisé en ce que l'eau de lavage fraîche est préchauffée par échange de chaleur avec l'eau de lavage chargée.

7. Procédé selon une ou plusieurs des revendications 1 à 6, caractérisé en ce que le gaz brut saturé de vapeur d'eau, ne comprenant pas de matières solides, est refroidi en plusieurs étapes, avec récupération de chaleur.
